# FASCICULE DE BREVET EUROPEEN

(11) **EP 1 289 902 B1**
(45) Date de publication et mention de la délivrance du brevet: **06.10.2004**
(21) Numéro de dépôt: 01938308.2
(22) Date de dépôt: 22.05.2001
(51) Int. Cl.: C04B 7/153, C04B 18/14, C04B 5/06, C21C 5/36

(54) **PROCEDE DE TRAITEMENT OXYDANT DES LAITIERS D'ACIERIE ET SCORIES LD OBTENUES**
OXIDATIVE BEHANDLUNG VON STAHLSCHLACKEN UND ENTHALTENDE LD SCHLACKE
METHOD FOR OXIDISING TREATMENT OF STEEL WORKS SLAG AND RESULTING LD SLAG

(30) Priorité: 24.05.2000 FR 0006644
(43) Date de publication de la demande: 12.03.2003
(73) Titulaire: LAFARGE, 75016 Paris (FR)
(72) Inventeur: SORRENTINO, François, F-69330 Meyzieu (FR); CHAPERON, Guy, F-75015 Paris (FR); BAYOUX, Jean-Pierre, F-69003 Lyon (FR)
(74) Mandataire: Catherine, Alain
(86) Numéro de dépôt international: PCT/FR2001/001585
(87) Numéro de publication internationale: WO 2001/090019

(56) Documents cités:
- FR-A- 2 355 785
- FR-A- 2 397 460
- GB-A- 1 556 833
- J.PIRET ET AL.: "Verwertung von LD-Schlacke zur Erzeugung von Portlandtementklinker und Roheisen" STAHL UND EISEN., no. 16, août 1984 (1984-08), pages 774-778, XP002159397 VERLAG STAHLEISEN GMBH. DUSSELDORF., DE ISSN: 0340-4803

## Description

La présente invention concerne d'une manière générale des scories LD traitées ayant des propriétés d'un liant hydraulique et un procédé d'obtention de telles scories LD par traitement des laitiers d'aciérie.

Plus particulièrement, l'invention concerne un traitement des laitiers d'aciérie donnant des scories LD traitées dont la composition minéralogique en font des matériaux synthétiques ayant des performances accrues lors de l'utilisation pour la construction (granulats pour béton ou routiers, liants hydrauliques ou à potentiel hydraulique).

L'obtention de produits hydrauliques ou à potentiel hydrauliques à partir de matières premières sans émission de CO₂ se heurte à des difficultés inhérentes à leur chimie et minéralogie défavorables pour l'obtention d'un liant.

Par défavorable, on entend que le produit obtenu ne sera utilisable, ni tout seul, ni éventuellement en mélange avec du ciment Portland parce qu'il ne donnera pas les performances de résistances voulues par les normes ou parce qu'il va engendrer des problèmes de gonflement et de destruction des structures. C'est le cas pour les scories LD (scories provenant des laitiers d'aciéries solidifiés et concassés).

Les scories LD sont des sous-produits de l'affinage des fontes hématites (fontes pauvres en phosphore) par le procédé de soufflage à l'oxygène. C'est un matériau riche en fer et en chaux ayant une composition minéralogique moyenne qui se situe dans l'assemblage formé de silicates dicalciques, ferrite de calcium et oxydes métalliques et dont la composition chimique moyenne des composés principaux est la suivante :

| Composé | % en poids |
|---|---|
| CaO | 50 |
| SiO₂ | 13 |
| Al₂O₃ | 3 |
| MgO | 6 |
| Oxydes de fer | 28 |
| Fer libre | Jusqu'à 20 |
| CaO libre | Jusqu'à 10 |

L'utilisation des scories LD sous forme de granulats pour béton, ou pour la construction routière pour la réalisation de couches supérieures bitumées et celle des couches de fondation est limitée par la présence de chaux libre qui va créer des expansions de la chaussée ou du béton,

La transformation des scories LD en liant hydraulique suscite également beaucoup d'intérêt.

Le brevet FR-2.546.530 décrit le traitement de laitiers d'aciérie en vue de leur utilisation cimentaire.

Le traitement décrit dans ce brevet consiste à additionner au laitier liquide au moins un composé susceptible de former de l'alumine, à apporter la quantité de chaleur nécessaire pour dissoudre le composé dans le laitier et à soumettre le laitier à un brassage par l'oxygène.

La quantité du ou des composés susceptibles de former l'alumine ajoutée au laitier liquide est telle que le laitier traité contienne 5 à 25% en poids d'alumine.

Bien.que le brevet FR-2.546.530 indique que le laitier ainsi traité peut être utilisé comme liant hydraulique, notamment pour la fabrication du ciment, ce traitement ne permet pas d'obtenir un liant hydraulique en lui-même, susceptible de remplacer le ciment Portland en totalité.

On a maintenant trouvé qu'il était possible de traiter un laitier d'aciérie de manière à lui conférer une composition minéralogique entrant dans des gammes de compositions minéralogiques spécifiques telles, que le laitier d'aciérie ainsi traité constitue un liant hydraulique en lui-même, susceptible de remplacer le ciment Portland en totalité.

La présente invention a donc pour objet un procédé de traitement des laitiers d'aciérie conduisant à des laitiers d'aciérie traités (scories LD) ayant une composition minéralogique spécifique grâce à quoi ces laitiers traités constituent des liants hydrauliques en eux-mêmes.

La présente invention a également pour objet des scories LD traitées ayant une composition minéralogique spécifique les rendant aptes à être utilisées comme liants hydrauliques en elles-mêmes.

Le procédé de traitement d'un laitier d'aciérie selon l'invention comprend :
- l'injection dans le laitier liquide d'oxygène gazeux ou d'.un mélange de gaz contenant du gaz oxygène ;
- l'ajout au laitier liquide et la dissolution dans ce dernier d'une source d'alumine et d'une source de chaux et éventuellement d'une source de silice et/ou de fer ;
- le refroidissement du laitier jusqu'à solidification de celui-ci, caractérisé en que les quantités ajoutées de source d'alumine et de chaux, et des éventuelles sources de silice et de fer sont telles et la vitesse de refroidissement telle que le laitier d'aciérie traité et solidifié a une composition minéralogique ayant l'une des constitutions suivantes :
   (a) une phase vitreuse amorphe ;
   (b) un premier assemblage de phases (1) constitué, en pourcent en poids, de 10-40 CA, 20-50 C2AS, 30-50 C6AF2 et 10-30 C2S ;
   (c) un deuxième assemblage de phases (2) constitué de, en pourcent en poids, de 20-40 C2F, 10-30 C2AS, 20-50 C6AF2 et 10-40 C2S ; et
   (d) un mélange d'une phase vitreuse amorphe et du premier ou du second assemblage de phases.

On rappelle que selon la notation classique des cimentiers :
C = CaO
A = Al₂O₃
S = SiO₂
F = Fe₂O₃
P=PO₄

Les phases ci-dessus ne sont pas des composés purs mais peuvent contenir en solution solide des impuretés comme le fer, la magnésie (MgO), le phosphore (P₂O₅), soufre, etc.

Les scories LD traitées selon l'invention se caractérisent par le fait qu'elles possèdent une composition minéralogique telle que définie ci-dessus.

Selon un mode de réalisation de l'invention, le laitier d'aciérie liquide est versé dans une cuve ou poche, et le bain de laitier est amené ou maintenu à une température de 1350°C à 1550°C, de préférence 1350°C à 1500°C et généralement à 1450°C, soumis dans la cuve à un brassage d'oxygène par injection d'oxygène gazeux ou d'un mélange de gaz contenant de l'oxygène gazeux, tel qu'un mélange d'air et d'oxygène, au moyen, par exemple, d'une torche comme décrit dans le brevet FR-2.546.530.

Comme cela est connu, cette injection d'oxygène non seulement assure le brassage du bain de laitier mais également l'oxydation du fer et de l'oxyde ferreux (FeO) présents dans le laitier en oxyde ferrique (Fe₂O₃). L'injection d'oxygène peut se faire en injectant de l'oxygène pur, de l'air ou un mélange d'oxygène et d'air. L'injection s'effectue en général de manière à obtenir une pression d'oxygène ou du mélange de gaz en équilibre avec le bain de laitier de 10² à 5.10⁵Pa, de préférence de 10⁵ à 5.10⁵ Pa.

Cette injection d'oxygène ou de mélange de gaz contenant de l'oxygène gazeux dure en général environ 30 minutes.

En fonction de la composition chimique du laitier d'aciérie à traiter et de l'utilisation finale voulue pour le laitier traité, on procède pendant le brassage à l'addition et à la dissolution dans le laitier liquide d'une quantité déterminée d'une source l'alumine, par exemple de l'alumine pure ou de la bauxite, et d'une quantité déterminée d'une source de chaux, par exemple de la chaux ou du calcaire (carbonate de calcium), et si nécessaire de quantités déterminées d'une source de silice, par exemple de la silice, d'une source de fer, par exemple de l'hématite

Les additions peuvent s'effectuer aisément au moyen de trémies appropriées.

En général, la dissolution des ajouts dans le laitier liquide ne nécessite pas d'apport extérieur de chaleur.

En effet, la température de coulée du laitier, est généralement supérieure ou égale à 1600°C et, puisque pour le traitement on maintient la température du laitier à 1350-1500°C, on peut utiliser le différentiel de chaleur pour la dissolution d'au moins une partie des ajouts.

Par ailleurs, comme cela est connu, l'oxydation du fer métal et de l'oxyde de fer ferreux (FeO) en oxyde ferrique (Fe₂O₃) est exothermique et la chaleur dégagée au cours de cette réaction peut également être utilisée pour dissoudre les ajouts.

De préférence, les ajouts sont introduits dans la poche avant la coulée du laitier liquide en provenance du convertisseur, pour assurer une protection des réfractaires de la poche.

En général, la quantité de source d'alumine ajoutée est telle que le taux d'alumine dans la scorie LD traitée obtenue est supérieur à 25% en poids, de préférence de l'ordre de 30% en poids ou plus et la quantité de source de chaux ajoutée est telle que le taux de chaux dans la scorie LD traitée obtenue est égal
ou supérieur à 40% en poids.

Les scories LD traitées obtenues contiennent 1% en poids ou moins et de préférence ne contiennent pas de chaux libre en quantité détectable.

Compte tenu des compositions des laitiers d'aciérie, les quantités d'alumine et de chaux ajoutées varient généralement de 700 à 1100 kg et de 400 à 800 kg, respectivement, pour 1000 kg de laitier traité.

Après dissolution des ajouts, le bain de laitier est ensuite refroidi à une vitesse de refroidissement lente ou rapide jusqu'à solidification du laitier, c'est-à-dire généralement jusqu'à une température de l'ordre de 1100 à 1200°C, appropriée pour l'obtention d'une des compositions minéralogiques selon l'invention.

Avec un refroidissement lent, le laitier traité a une composition minéralogique qui peut varier d'une composition constituée uniquement du premier assemblage de phases (1) ou du second assemblage de phases (2) à une composition constituée d'un mélange d'une phase vitreuse et du premier ou du second assemblage de phases, de préférence du second assemblage de phases. Lorsque la composition minéralogique du laitier traité comprend à la fois une phase vitreuse et le premier ou second assemblage de phases, la phase vitreuse peut représenter jusqu'à 95% en poids du laitier traité. De préférence, la phase vitreuse représente de 5 à 15% en poids et mieux de 5 à 10% en poids du laitier traité.

Avec un refroidissement rapide, on obtient un laitier traité constitué en totalité d'une phase vitreuse amorphe.

Dans le cadre de la présente invention, on entend par refroidissement rapide les vitesses de refroidissement conduisant à des scories LD traitées constituées à 100% d'une phase vitreuse et par refroidissement lent les vitesses de refroidissement conduisant à des scories LD traitées constituées soit d'un des premier ou second assemblages de phases (1) et (2), soit à un mélange d'ùn de ces assemblages avec une phase vitreuse.

Ces vitesses de refroidissement dépendent principalement des taux de SiO₂ et Al₂O₃ voulus pour la scorie LD traitée.

Le tableau ci-dessous donne à titre indicatif les gammes de vitesses de refroidissement à utiliser, en fonction des taux de SiO₂ et Al₂O₃ voulus pour la scorie LD traitée, pour obtenir soit 100% de phase vitreuse soit 5% en poids ou moins de phase vitreuse.

En utilisant des vitesses de refroidissement entre les deux limites, on obtient des mélanges, en proportions variables, des assemblages de phases (1)
ou (2) et de phase vitreuse.

| Teneur en SiO₂ et Al₂O₃ de la scorie LD traitée obtenue (% en poids) | | Vitesse de refroidissement (°C/seconde) | % en poids de phase vitreuse |
|---|---|---|---|
| 5 ≤ SiO₂ ≤ 9 | 35 ≤ Al₂O₃ ≤ 50 | ≥ 100 | 100 |
| | | ≤ 30 | ≤ 5 |
| 5 ≤ SiO₂ ≤ 9 | 5 ≤ Al₂O₃ ≤ 35 | ≥ 50 | 100 |
| | | ≤ 20 | ≤ 5 |
| 9 ≤ SiO₂ ≤ 30 | 5 ≤ Al₂O₃ ≤ 35 | ≥ 20 | 100 |
| | | ≤ 10 | ≤ 5 |

En utilisant des vitesses de refroidissement entre les vitesses indiquées dans le tableau, on obtient des mélanges de l'assemblage (1) ou (2) et de phase vitreuse en proportions variables.

Le refroidissement peut s'effectuer par tout moyen approprié, tel qu'un refroidissement par air ou par eau, de préférence par air.

Ce refroidissement est poursuivi jusqu'à solidification du laitier, classiquement à une température de 1100-1200°C.

Les scories LD traitées obtenues peuvent être concassées pour former des granulats. Ces granulats peuvent être utilisés seuls comme liants hydrauliques ou encore être mélangés à des ciments pour remplacer en partie ou en totalité les sables classiquement utilisés.

Les exemples suivants illustrent la présente invention.

### Exemple 1

On traite par le procédé de l'invention un laitier d'aciérie ayant les caractéristiques suivantes :

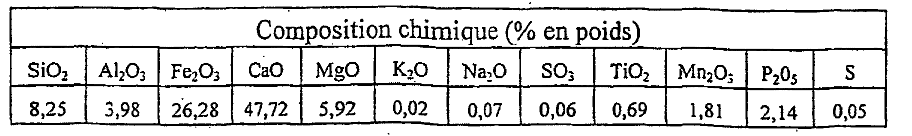

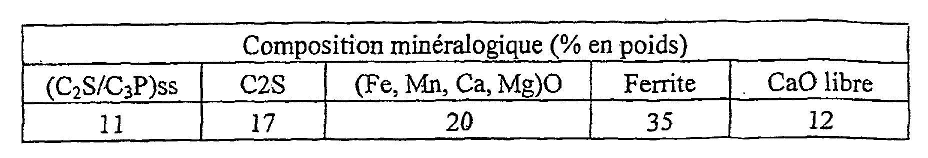

Le laitier d'aciérie à l'état liquide, coulé dans une poche est brassé et oxydé à 1350°C par insufflation d'oxygène au moyen d'une torche. Le débit d'oxygène est réglé pour obtenir une pression d'oxygène en équilibre avec le bain du laitier de 5.10⁵Pa.

Préalablement à la coulée du laitier, on a introduit dans la poche les ajouts suivants :

| Ajouts (en Kg pour 1000 kg de laitier) | | | | | |
|---|---|---|---|---|---|
| Bauxite | Alumine | Chaux | Silice | Fe₂O₃ | Calcaire |
| 142 | - | - | 70 | 140 | 250 |

Après dissolution des ajouts, on arrête l'insufflation d'oxygène et on refroidit le laitier à l'air à une vitesse de 5°C/seconde jusqu'à une température de 1100°C.

La scorie LD traitée obtenue a la composition minéralogique suivante :

| Composition minéralogique (% en poids) | | | | |
|---|---|---|---|---|
| C2AS | C6AF2 | C2S | C2F | Phase vitreuse |
| 20 | 25 | 20 | 30 | 5 |

La scorie traitée obtenue est concassée et tamisée de façon à présenter la répartition granulométrique d'un sable normalisé. La répartition granulométrique est donnée dans le tableau ci-dessous :

| Taille des particules | Sable normalisé (%) | Scorie traitée (%) |
|---|---|---|
| Entre 1 et 2 mm | 33 | 31,1 |
| Entre 1 et 600 µm | 21,8 | 26,5 |
| Entre 600 et 200 µm | 26 | 24,5 |
| Entre 200 et 100 µm | 16,8 | 15,7 |
| Au dessous | 2,3 | 2,1 |

On confectionne, dans les conditions normales, un mortier avec du ciment Portland (1 partie en poids) et un sable constitué de moitié du sable normalisé et de moitié de la scorie traitée (3 parties en poids). A titre comparatif, on a également confectionné dans les conditions standards un mortier constitué de ciment Portland (1 partie en poids) et de sable normalisé (3 parties en poids).

On forme, à partir de ces mortiers, des éprouvettes prismatiques 4cm x 4 cm x 16 cm, par gâchée avec un rapport eau/ciment (E/C) de 0,5.

On détermine sur les éprouvettes les résistances à la flexion et à la compression. Les résultats obtenus sont indiqués ci-dessous :

| | Résistance à la flexion R_{f} (MPa) | | | | Résistance à la compression R_{c} (MPa) | | | |
|---|---|---|---|---|---|---|---|---|
| | 24 heures | 2 jours | 7 jours | 28 jours | 24 heures | 2 jours | 7 jours | 28 jours |
| Ciment Portland + sable normalisé | 3,3 | 5 | 7,4 | 9,7 | 17,2 | 27,9 | 43,1 | 57,8 |
| Ciment Portland + 50% sable normalisé / 50% Scorie traitée | 4 | 5,3 | 7,7 | 9,9 | 20 | 30,7 | 43,6 | 65,6 |

On peut voir qu'en utilisant un sable constitué de 50% en poids de sable normalisé et 50% en poids de scorie traitée selon l'invention, on obtient un gain de résistance significatif.

Certaines éprouvettes n'ayant pas subi les tests mécaniques ont été utilisées pour le test de gonflement ASTM C151 et AASHTO T107. Le test s'est avéré négatif (pas de gonflement).

On a répété les essais ci-dessus en remplaçant le ciment Portland par du ciment Fondu (ciment à base d'aluminate de calcium). Les résultats ci-dessous montrent un gain significatif de résistance lors de l'emploi de la scorie traitée selon l'invention.

| | Résistance à la flexion R_{f} (MPa) | | | | Résistance à la compression R_{c} (MPa) | | | |
|---|---|---|---|---|---|---|---|---|
| | 24 heures | 2 jours | 7 jours | 28 jours | 24 heures | 2 jours | 7 jours | 28 jours |
| Ciment Fondu + sable normalisé | 8,5 | 7,4 | 0,3 | 9,1 | 66,5 | 80,0 | 98 | 113,1 |
| Ciment Fondu + 50% sable normalisé / 50% scorie traitée | 8 | 8,6 | 9,2 | 10,9 | 88,5 | 90,1 | 105,0 | 129,7 |

Le test de gonflement ASTMC 151 et AASHTO T107 s'est également avéré négatif.

Cet exemple montre que le granulat obtenu à partir des scories LD traitées de l'invention est meilleur que le sable, c'est-à-dire un granulat habituellement utilisé dans la formulation des mortiers.

### Exemple 2

On a traité, par le procédé de l'invention, différents laitiers d'aciérie ayant les caractéristiques suivantes :

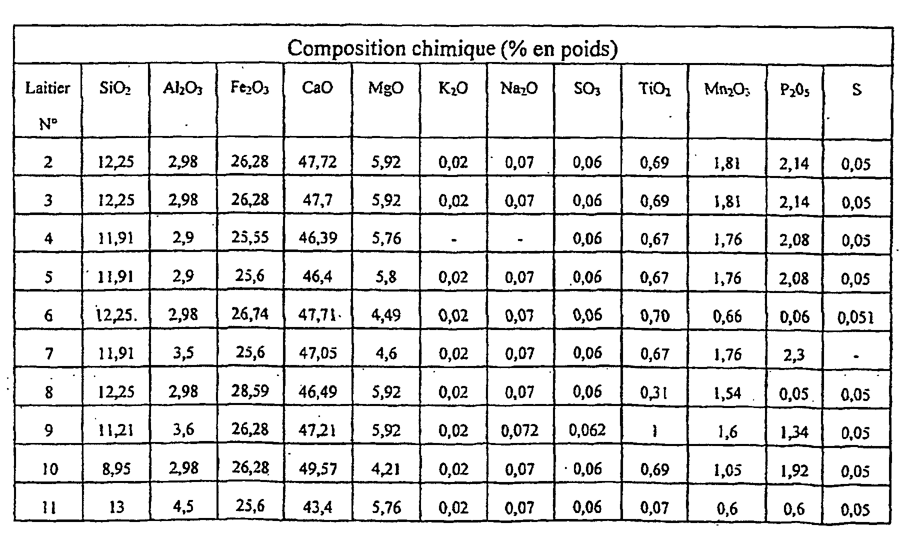

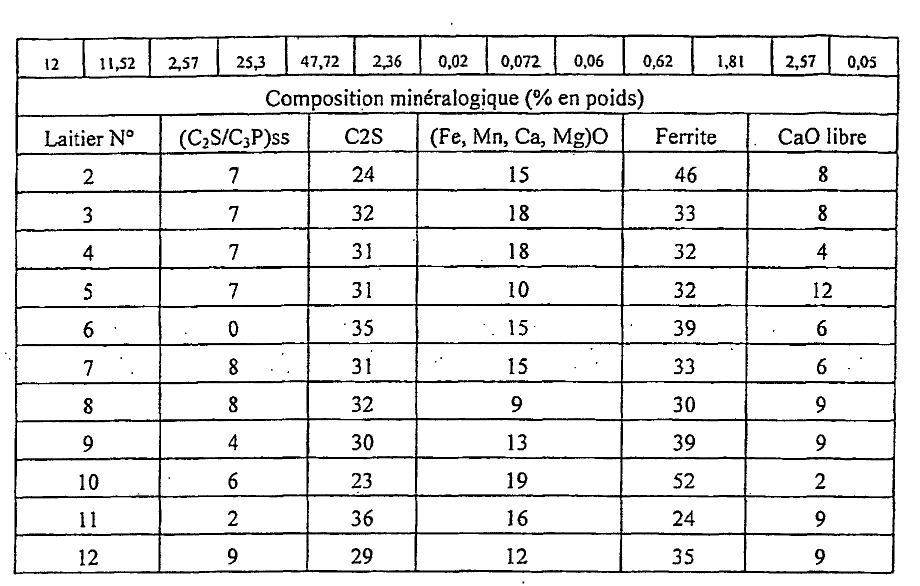

Les laitiers d'aciérie ci-dessus à l'état liquide, coulés dans une poche, sont brassés et oxydés comme dans l'exemple 1 dans les conditions indiquées ci-après.

| Laitier N° | Température de traitement (°C) | Gaz d'injection | | Durée du traitement (minutes) |
|---|---|---|---|---|
| | | Composition | Pression (Pa) | |
| 2 | 1450 | Air + oxygène (50%) | 4.10⁵ | 30 |
| 3 | 1450 | Air + oxygène | 5.10⁵ | 30 |
| 4 | 1450 | Air + oxygène | 10⁵ | 35 |
| 5 | 1450 | Air + oxygène (50%) | 5.10⁵ | 30 |
| 6 | 1450 | Air + oxygène (50%) | 5.10⁵ | 30 |
| 7 | 1450 | Air+oxygène (50%) | 5.10⁵ | 30 |
| 8 | 1450 | Air + oxygène (50%) | 5.10⁵ | 30 |
| 9 | 1450 | Air + oxygène | 4.10⁵ | 30 |
| 10 | 1450 | Air+ oxygène | 5.10⁵ | 30 |
| 11 | 1450 | Air + oxygène | 5.10⁵ | 30 |
| 12 | 1450 | Air+oxygène | 5.10⁵ | 30 |

Comme dans l'exemple 1, on avait préalablement à la coulée du laitier introduit dans la poche les ajouts suivants :

| Ajouts (en kg pour 1000 kg de laitier) | | | | | | |
|---|---|---|---|---|---|---|
| Laitier N° | Bauxite | | Alumine | Chaux | Silice | Hématite |
| | de Guinée | Chinoise | | | | |
| 2 | 985 | - | - | 606 | - | 49 |
| 3 | 1057 | - | - | 432 | | 48 |
| 4 | - | 998 | - | 664 | 74 | 87 |
| 5 | - | - | 720 | 650 | 100 | 74 |
| 6 | - | - | 867 | 577 | 26 | 74 |
| 7 | - | - | 750 | 612,5 | .20 | 71 |
| 8 | - | - | 874 | 721 | 99 | - |
| 9 | - | - | 805 | 779 | 129 | - |
| 10 | - | - | 819 | 571 | - | 47 |
| 11 | - | - | 685 | 551 | 49 | 68 |
| 12 | - | - | 876 | 554 | 57 | - |

Après dissolution des ajouts, on arrête l'insufflation d'air et d'oxygène et on refroidit les laitiers dans les conditions ci-dessous :

| Laitier N° | Type de refroidissement | Vitesse de refroidissement (°C/seconde) | Température finale de refroidissement (°C) |
|---|---|---|---|
| 2 | Air | 60 | 1200 |
| 3 | Air | 60 | 1200 |
| 4 | Air | 100 | 1200 |
| 5 | Air | 60 | 1200 |
| 6 | Air | 60 | 1200 |
| 7 | Air | 60 | 1200 |
| 8 | Air | 65 | 1200 |
| 9 | Eau | 110 | 1200 |
| 10 | Air | 60 | 1200 |
| 11 | Air | 65 | 1200 |
| 12 | Air | 75 | 1200 |

Les scories LD traitées obtenues sont constituées à 100% d'une phase vitreuse amorphe.

Les scories obtenues par le traitement sont broyées à 3500 cm²/g. Mélangées à de l'eau, on obtient les dégagements de chaleur suivants :

| Scorie N° | Premier pic | | | Deuxième pic | | |
|---|---|---|---|---|---|---|
| | Intensité (mn) | Temps (minutes) | Chaleur à 15' (J/g) | Intensité (mn) | Temps (minutes) | Chaleur à 24 heures (J/g) |
| 2 | 105750 | 10'15 | 80 | - | 65' | 465 |
| 3 | 7370 | 3'30 | 4 | - | - | 70 |
| 4 | 7460 | 2'25 | 4 | 4255 | 132' | 140 |
| 5 | 6770 | 2' | 14 | 38290 | 18' | 415 |
| 6 | 38450 | 27' | 30 | - | - | 265 |
| 7 | 213900 | 5' | 120 | - | - | 440 |
| 8 | 32685 | 8' | 25 | 7425 | 210' | 396 |
| 9 | 103580 | 6' | 73 | - | - | 390 |
| 10 | 420520 | 3' | 125 | - | - | 490 |
| 11 | 61795 | 9' | 45 | - | - | 345 |
| 12 | 10235 | 2' | 10 | - | - | 85 |

On utilise les scories traitées ci-dessus comme ciment dans des conditions normalisées (E/C = 0,5 ; éprouvettes prismatiques 4cm x 4 cm x 16 cm) et on détermine le temps de prise et la résistance à la compression (R_{c}). Les résultats sont donnés dans le tableau ci-dessous :

| Scorie N° | Temps de prise (minutes) | Résistance à la compression R_{c} (MPa) | | | |
|---|---|---|---|---|---|
| | | 6 heures | 24 heures | 7 jours | 28 jours |
| 2 | 5 | 19 | 42 | - | 65 |
| 3 | 120 | - | 1 | 15 | 60 |
| 4 | 240 | 0 | 7 | 17 | 62 |
| 5 | 120 | 17 | 34 | 38 | 42 |
| 6 | - | 0 | 24 | 72 | 98 |
| 7 | 30 | 29 | 54 | 62 | 63 |
| 8 | 30 | 19 | 42 | 60 | 70 |
| 9 | 10 | 22 | 32 | 41 | 43 |
| 10 | 10 | 34 | 38 | 45 | 55 |
| 11 | - | 0 | 17 | 46 | 65 |
| 12 | - | 0 | 2 | 26 | 54 |

Les exemples ci-dessus montrent que le traitement de l'invention permet d'obtenir une scorie LD traitée ayant en elle-même les qualités d'un liant hydraulique.

On ajoute à du ciment Portland (1 partie) un sable constitué pour moitié de sable normalisé et pour moitié de la scorie n°2 concassée. On forme, à partir de ce mélange, des éprouvettes prismatiques dans des conditions normalisées (E/C = 0,5 ; éprouvettes 4 cm x 4 cm x 16 cm) et on détermine le temps de prise et la résistance à la compression. Les résultats sont donnés ci-après :

| Temps de prise (minutes) | Résistance à la flexion R_{c} (MPa) | | | |
|---|---|---|---|---|
| | 6 heures | 24 heures | 7 jours | 28 jours |
| 5 | 8 | 26 | 32 | 55 |

### Exemple 3

On traite par le procédé de l'invention des laitiers d'aciérie ayant les caractéristiques suivantes :

| Composition chimique (% en poids) | | | | | | | | | | | | |
|---|---|---|---|---|---|---|---|---|---|---|---|---|
| Laitier N° | SiO₂ | Al₂O₃ | Fe₂O₃ | CaO | MgO | K₂O | Na₂O | SO₃ | TiO₂ | Mn₂O₃ | P₂O₅ | S |
| 13 | 12,25 | 2,98 | 26,28 | 47,7 | 5,92 | 0,02 | 0,07 | 0,06 | 0,69 | 1,81 | 2,14 | 0,05 |
| 14 | 11,91 | 2,9 | 25,55 | 46,39 | 5,76 | - | - | 0,06 | 0,67 | 1,76 | 2,08 | 0,05 |
| 15 | 11,91 | 2,9 | 25,6 | 46,4 | 5,8 | 0,02 | 0,07 | 0,06 | 0,67 | 1,76 | 2,08 | 0,05 |
| 16 | 12,3 | 2,98 | 26,28 | 47,7 | 5,92 | 0,02 | 0,07 | 0,06 | 0,69 | 1,81 | 2,14 | 0,05 |

| Composition minéralogique (% en poids) | | | | | |
|---|---|---|---|---|---|
| Laitier N° | (C₂S/C₃P)ss | C2S | (Fe, Mn, Ca, Mg)O | Ferrite | CaO libre |
| 13 | 7 | 32 | 18 | 33 | 8 |
| 14 | 7 | 31 | 18 | 32 | 4 |
| 15 | 7 | 31 | 10 | 32 | 12 |
| 16 | 7 | 33 | 11 | 33 | 9 |

Les laitiers d'aciérie ci-dessus a l'état liquide, coulés dans une poche, sont brassés et oxydés dans les conditions indiquées ci-après :

| Laitier N° | Température de traitement (°C) | Gaz d'injection | | Durée du traitement (minutes) |
|---|---|---|---|---|
| | | Composition | Pression (Pa) | |
| 13 | 1450°C | Oxygène | 5.10⁵ | 30 |
| 14 | 1450°C | Air + oxygène (50%) | 5.10⁵ | 30 |
| 15 | 1450°C | Air + oxygène (50%) | 5.10⁵ | 30 |
| 16 | 1450°C | Air + oxygène (50%) | 5.10⁵ | 30 |

Comme dans l'exemple 1, on avait préalablement à la coulée des laitiers, introduit dans la poche les ajouts suivants :

| Ajouts (en Kg pour 1000 Kg de laitier) | | | | | | |
|---|---|---|---|---|---|---|
| Laitier N° | Bauxite | | Alumine | Chaux | Silice | Hématite |
| | de Guinée | Chinoise | | | | |
| 13 | 1057 | - | - | 432 | - | 48 |
| 14 | - | 998 | - | 660 | 74 | 87 |
| 15 | - | - | 720 | 650 | 100 | 74 |
| 16 | - | 513 | - | 238 | 129 | 49 |

Après dissolution des ajouts, on arrête l'insufflation et on refroidit les laitiers dans les conditions ci-dessous :

| Laitier N° | Type de refroidissement | Vitesse de refroidissement (°C / seconde) | Température finale de refroidissement (°C) |
|---|---|---|---|
| 13 | Air | 5 | 1200 |
| 14 | Air | 5 | 1200 |
| 15 | Air | 10 | 1200 |
| 16 | Air | 30 | 1200 |

Les scories LD obtenues ont les compositions minéralogiques suivantes :

| Composition minéralogique des scories (% en poids) | | | | | | | |
|---|---|---|---|---|---|---|---|
| Scorie N° | CA | C2S | C2F | C6AF2 | C2AS | CaO libre | Phase vitreuse |
| 13 | 29 | 11 | - | 40 | 20 | - | - |
| 14 | 30 | 12 | - | 34 | 23 | 1 | - |
| 15 | 30 | 20 | - | 35 | 20 | - | - |
| 16 | - | 25 | 20 | 20 | 25 | - | 10 |

Les scories obtenues par le traitement sont broyées à 3500 cm²/g. Mélangées à de l'eau, on obtient les dégagements de chaleur suivants :

| Scorie N° | Premier pic | | | Deuxième pic | | |
|---|---|---|---|---|---|---|
| | Intensité (mn) | Temps (minutes) | Chaleur à 15' (J/g) | Intensité (mn) | Temps (minutes) | Chaleur à 24 heures (J/g) |
| 13 | 11370 | 1'50 | 4 | 29120 | 310 | 370 |
| 14 | 10470 | 1'40 | 4 | 11240 | 272 | 310 |
| 15 | 6415 | 3'15 | 9 | 13490 | 86 | 330 |
| 16 | 6000 | 1'15 | 3 | 5130 | 203 | 110 |

On utilise les scories traitées ci-dessus comme ciment dans des conditions normalisées (E/C = 0,5 ; éprouvettes prismatiques 4cm x 4 cm x 16 cm) et on détermine le temps de prise et la résistance à la compression (R_{c}). Les résultats sont donnés dans le tableau ci-dessous :

| Scorie N° | Temps de prise (minutes) | Résistance à la compression R_{c} (MPa) | | | |
|---|---|---|---|---|---|
| | | 6 heures | 24 heures | 7 jours | 28 jours |
| 13 | 120 | 23 | 75 | 98 | 110 |
| 14 | - | 11 | 60 | 90 | 100 |
| 15 | 90 | 7 | 52 | 69 | 74 |

Les essais ci-dessus montrent que les scories LD traitées selon l'invention ayant comme composition minéralogique le premier ou le second assemblage de phases présentent par elles-mêmes des propriétés de liant hydraulique.

Dans tous les exemples les résistances à la flexion (R_{f}) et à la compression (R_{c}) ont été déterminés selon les normes NF EN 196-1.

## Revendications

1. Procédé de traitement d'un laitier d'aciérie comprenant :
- l'injection dans le laitier liquide d'oxygène ou d'un mélange de gaz contenant de l'oxygène gazeux pour brasser et oxyder le laitier ;
- l'ajout et la dissolution dans le laitier liquide brassé d'une source d'alumine et d'une source de chaux et facultativement d'une source de silice et/ou de fer ; et
- le refroidissement du laitier jusqu'à solidification ; les quantités ajoutées des sources d'alumine et de chaux et éventuellement de silice et/ou de fer et la vitesse de refroidissement étant telles que le laitier traité obtenu a une composition minéralogique ayant l'une des constitutions suivantes :
(a) une phase vitreuse amorphe ;
(b) un premier assemblage de phases (1) constitué, en pourcent en poids, de 10-40 CA, 20-50 C2AS, 30-50 C6AF2 et 10-30 C2S ;
(c) un deuxième assemblage de phases (2) constitué, en pourcent en poids, de 20-40 C2F, 10-30 C2AS, 20-50 C6AF2 et 10-40 C2S ; et
(d) un mélange d'une phase vitreuse amorphe et du premier ou du deuxième assemblage de phases.

2. Procédé selon la revendication 1, **caractérisé en ce que** le laitier liquide est à une température de 1350° à 1550°C, de préférence 1350 à 1500°C.

3. Procédé selon la revendication 1 ou 2, **caractérisé en ce que** l'injection d'oxygène ou du mélange de gaz contenant de l'oxygène gazeux est réglée pour obtenir une pression d'oxygène ou de mélange de gaz en équilibre avec le laitier liquide de 10² à 5.10⁵ Pa, de préférence 10⁵ à 5.10⁵ Pa.

4. Procédé selon l'une quelconque des revendications précédentes, **caractérisé en ce que** la vitesse de refroidissement est une vitesse de refroidissement rapide et le laitier traité obtenu est constitué en totalité d'une phase vitreuse amorphe (a).

5. Procédé selon l'une quelconque des revendications 1 à 3, **caractérisé en ce que** la vitesse de refroidissement est une vitesse de refroidissement lente et le laitier obtenu est constitué (b) du premier assemblage de phases (1) ou (c) du second assemblage de phases (2) ou (d) du mélange d'une phase vitreuse et du premier ou du second assemblage de phases.

6. Procédé selon la revendication 5, **caractérisé en ce que** dans le mélange (d), la phase vitreuse représente 5 à 95% en poids du laitier traité.

7. Procédé selon l'une quelconque des revendications précédentes, **caractérisé en ce que** la source d'alumine est l'alumine ou la bauxite, la source de chaux est la chaux ou le calcaire, la source de silice la silice et la source de fer l'hématite.

8. Procédé selon l'une quelconque des revendications précédentes, **caractérisé en ce que** la quantité d'alumine ajoutée est telle que le taux d'alumine dans le laitier traité représente plus de 25% en poids, de préférence au moins 30% en poids du laitier traité.

9. Procédé selon l'une quelconque des revendications précédentes, **caractérisé en ce que** la quantité de chaux ajoutée est telle que le taux de chaux dans le laitier traité représente au moins 40% en poids du laitier traité.

10. Scorie LD traitée (scorie de laitier d'aciérie solidifiée et concassée, traitée), **caractérisée en ce qu'**elle possède une composition minéralogique ayant l'une des constitutions suivantes:
(a) une phase vitreuse amorphe;
(b) un premier assemblage de phases (1) constitué en pourcent en poids, de 10-40 CA, 20-50 C2AS, 30-50 C6AF2 et 10-30 C2S;
(c) un deuxième assemblage de phases (2) constitué, en pourcent en poids, de 20-40 C2F, 10-30 C2AS, 20-50 C6AF2 et 10-40 C2S; et
(d) un mélange d'une phase vitreuse amorphe et du premier ou du deuxième assemblage de phases.

11. Scorie LD traitée selon la revendication 10 **caractérisée en ce qu'**elle est constituée en totalité d'une phase vitreuse amorphe.

12. Scorie LD traitée selon la revendication 10 **caractérisée en ce qu'**elle est constituée du premier assemblage de phases (1) ou du second assemblage de phases (2).

13. Scorie LD traitée selon la revendication 10 **caractérisée en ce qu'**elle est constituée d'un mélange d'une phase vitreuse et du second assemblage de phases (2).

14. Scorie LD traitée selon la revendication 13 **caractérisée en ce que** la phase vitreuse représente 5 à 95% en poids, de préférence 5 à 15% en poids de la scorie LD traitée.

15. Scorie LD traitée selon l'une quelconque des revendications 10 à 14 **caractérisée en ce que** le taux d'alumine présent dans la scorie traitée représente plus de 25% en poids, de préférence au moins 30% en poids de la scorie.

16. Scorie LD traitée selon l'une quelconque des revendications 10 à 15 **caractérisée en ce que** le taux de chaux présent dans la scorie traitée représente au moins 40% en poids de la scorie.

17. Scorie LD traitée selon l'une quelconque des revendications 10 à 16 sous forme d'un granulat.

18. Matériau comprenant un mélange d'un ciment et du granulat selon la revendication 17.

## Patentansprüche

1. Verfahren zur Behandlung einer Schlacke aus der Stahlgewinnung, umfassend:
Einblasen von Sauerstoff oder eines Gasgemischs, das gasförmigen Sauerstoff enthält, in die flüssige Schlacke, so dass die Schlacke durchmischt und oxidiert wird;
Zugeben und Auflösen einer Aluminiumoxidquelle und einer Kalkquelle sowie gegebenenfalls einer Siliciumoxid- und/oder Eisenquelle in der durchmischten Schlacke; und
Abkühlen der Schlacke bis zur Erstarrung, wobei die zugegebenen Mengen der Aluminiumoxid- und der Kalkquelle und gegebenenfalls der Siliciumoxid- und/oder Eisenquelle und die Abkühlgeschwindigkeit so groß sind, dass die erhaltene behandelte Schlacke eine mineralogische Zusammensetzung mit einer der folgenden Konstitutionen hat:
(a) eine amorphe Glasphase;
(b) eine erste Menge von Phasen (1), die aus 10-40 Gew.-% CA, 20-50 Gew.-% C2AS, 30-50 Gew.-% C6AF2 und 10-30 Gew.-% C2S besteht;
(c) eine zweite Menge von Phasen (2), die aus 20-40 Gew.-% C2F, 10-30 Gew.-% C2AS, 20-50 Gew.-% C6AF2 und 10-40 Gew.-% C2S besteht; und
(d) ein Gemisch aus einer amorphen Glasphase und der ersten oder zweiten Menge von Phasen.

2. Verfahren gemäß Anspruch 1, **dadurch gekennzeichnet, dass** die flüssige Schlacke eine Temperatur von 1350 bis 1550°C, vorzugsweise 1350 bis 1500°C, hat.

3. Verfahren gemäß Anspruch 1 oder 2, **dadurch gekennzeichnet, dass** das Einblasen von Sauerstoff oder des Gasgemischs, das gasförmigen Sauerstoff enthält, so gesteuert wird, dass man einen Druck des Sauerstoffs oder des Gasgemischs im Gleichgewicht mit der flüssigen Schlacke von 10² bis 5·10⁵ Pa, vorzugsweise 10⁵ bis 5·10⁵ Pa, erhält.

4. Verfahren gemäß einem der vorstehenden Ansprüche, **dadurch gekennzeichnet, dass** die Abkühlgeschwindigkeit eine hohe Abkühlgeschwindigkeit ist und die erhaltene behandelte Schlacke vollständig aus einer amorphen Glasphase (a) besteht.

5. Verfahren gemäß einem der Ansprüche 1 bis 3, **dadurch gekennzeichnet, dass** die Abkühlgeschwindigkeit eine geringe Abkühlgeschwindigkeit ist und die erhaltene Schlacke aus (b) der ersten Menge von Phasen (1) oder (c) der zweiten Menge von Phasen (2) oder (d) dem Gemisch aus einer Glasphase und der ersten oder zweiten Menge von Phasen besteht.

6. Verfahren gemäß Anspruch 5, **dadurch gekennzeichnet, dass** die Glasphase im Gemisch (d) 5 bis 95 Gew.-% der behandelten Schlacke darstellt.

7. Verfahren gemäß einem der vorstehenden Ansprüche, **dadurch gekennzeichnet, dass** es sich bei der Aluminiumoxidquelle um Aluminiumoxid oder Bauxit, bei der Kalkquelle um Kalk oder Kalkstein, bei der Siliciumoxidquelle um Siliciumoxid und bei der Eisenquelle um Hämatit handelt.

8. Verfahren gemäß einem der vorstehenden Ansprüche, **dadurch gekennzeichnet, dass** die zugefügte Menge des Aluminiumoxids so groß ist, dass der Gehalt an Aluminiumoxid in der behandelten Schlacke mehr als 25 Gew.-%, vorzugsweise wenigstens 30 Gew.-%, der behandelten Schlacke ausmacht.

9. Verfahren gemäß einem der vorstehenden Ansprüche, **dadurch gekennzeichnet, dass** die zugefügte Menge des Kalks so groß ist, dass der Gehalt an Kalk in der behandelten Schlacke wenigstens 40 Gew.-% der behandelten Schlacke ausmacht.

10. Behandelte LD-Schlacke (behandelte erstarrte und zerkleinerte Schlacke aus der Stahlgewinnung), **dadurch gekennzeichnet, dass** sie eine mineralogische Zusammensetzung mit einer der folgenden Konstitutionen besitzt:
(a) eine amorphe Glasphase;
(b) eine erste Menge von Phasen (1), die aus 10-40 Gew.-% CA, 20-50 Gew.-% C2AS, 30-50 Gew.-% C6AF2 und 10-30 Gew.-% C2S besteht;
(c) eine zweite Menge von Phasen (2), die aus 20-40 Gew.-% C2F, 10-30 Gew.-% C2AS, 20-50 Gew.-% C6AF2 und 10-40 Gew.-% C2S besteht; und
(d) ein Gemisch aus einer amorphen Glasphase und der ersten oder zweiten Menge von Phasen.

11. Behandelte LD-Schlacke gemäß Anspruch 10, **dadurch gekennzeichnet, dass** sie vollständig aus einer amorphen Glasphase besteht.

12. Behandelte LD-Schlacke gemäß Anspruch 10, **dadurch gekennzeichnet, dass** sie aus der ersten Menge von Phasen (1) oder der zweiten Menge von Phasen (2) besteht.

13. Behandelte LD-Schlacke gemäß Anspruch 10, **dadurch gekennzeichnet, dass** sie aus einem Gemisch aus einer Glasphase und der zweiten Menge von Phasen (2) besteht.

14. Behandelte LD-Schlacke gemäß Anspruch 13, **dadurch gekennzeichnet, dass** die Glasphase 5 bis 95 Gew.-%, vorzugsweise 5 bis 15 Gew.-%, der behandelten LD-Schlacke darstellt.

15. Behandelte LD-Schlacke gemäß einem der Ansprüche 10 bis 14, **dadurch gekennzeichnet, dass** der in der behandelten Schlacke vorhandene Aluminiumoxidgehalt mehr als 25 Gew.-%, vorzugsweise wenigstens 30 Gew.-%, der Schlacke, ausmacht.

16. Behandelte LD-Schlacke gemäß einem der Ansprüche 10 bis 15, **dadurch gekennzeichnet, dass** der in der behandelten Schlacke vorhandene Kalkgehalt wenigstens 40 Gew.-% der Schlacke ausmacht.

17. Behandelte LD-Schlacke gemäß einem der Ansprüche 10 bis 16 in Form eines Granulats.

18. Material, das ein Gemisch aus einem Zement und dem Granulat gemäß Anspruch 17 umfasst.

## Claims

1. Method for the treatment of a steel works slag comprising:
- the injection into the liquid slag of oxygen or a mixture of gases containing gaseous oxygen to mix and oxidise the slag;
- the addition to and dissolution in the mixed liquid slag of a source of alumina and a source of lime and optionally a source of silica and/or iron; and
- the cooling of the slag until it solidified; the quantities added of the sources of alumina and lime and optionally of silica and/or iron and the rate of cooling being such that the treated slag obtained has a mineralogical composition with one of the following :
- (a) an amorphous vitreous phase;
- (b) a first set of phases (1) comprising, in percentage by weight, 10-40 CA, 20-50 C2AS, 30-50 C6AF2 and 10-30 C2S;
- (c) a second set of phases (2) comprising, in percentage by weight, 20-40 C2F, 10-30 C2AS, 20-50 C6AF2 and 10-40 C2S; and
- (d) a mixture of an amorphous vitreous phase and of the first or second set of phases.

2. Method according to Claim 1, **characterised in that** the liquid slag is at a temperature of 1350 to 1550°C, preferably 1350 to 1500°C.

3. Method according to Claim 1 or 2, **characterised in that** the injection of oxygen or the mixture of gases containing gaseous oxygen is controlled in order to obtain an oxygen pressure of oxygen or mixture of gases in equilibrium with the liquid slag of 10² to 5.10⁵ Pa, preferably 10⁵ to 5.10⁵ Pa.

4. Method according to any one of the preceding Claims, **characterised in that** the rate of cooling is a rapid rate of cooling and the treated slag obtained is made entirely of an amorphous vitreous phase (a).

5. Method according to any one of Claims 1 to 3, **characterised in that** the rate of cooling is a slow rate of cooling and the slag obtained is made (b) of the first set of phases (1) or (c) the second set of phases (2) or (d) a mixture of a vitreous phase and the first or second set of phases.

6. Method according to Claim 5, **characterised in that** in the mixture (d), the vitreous phase represents 5 to 95% by weight of the treated slag.

7. Method according to any one of the preceding Claims, **characterised in that** the source of alumina is alumina or bauxite, the source of lime is lime or limestone, the source of silica is silica and the source of iron is hematite.

8. Method according to any one of the preceding Claims, **characterised in that** the quantity of alumina added is such that the proportion of alumina in the treated slag represents more than 25% by weight, preferably at least 30% by weight of the slag treated.

9. Method according to any one of the preceding Claims, **characterised in that** the quantity of lime added is such that the proportion of lime in the treated slag represents at least 40% by weight of the treated slag.

10. Treated LD scoria ( scoria from treated solidified and crushed steel works slag) **characterised in that** it has a mineralogical composition having one of the following:
- (a) an amorphous vitreous phase;
- (b) a first set of phases (1) comprising, in percentage by weight, 10-40 CA, 20-50 C2AS, 30-50 C6AF2 and 10-30 C2S;
- (c) a second set of phases (2) comprising, in percentage by weight, 20-40 C2F, 10-30 C2AS, 20-50 C6AF2 and 10-40 C2S; and
- (d) a mixture of an amorphous vitreous phase and of the first or second set of phases.

11. Treated LD scoria according to Claim 10, **characterised in that** it is made entirely by an amorphous vitreous phase.

12. Treated LD scoria according to Claim 10, **characterised in that** it is made by the first set of phases (1) or by the second set of phases (2).

13. Treated LD scoria according to Claim 10, **characterised in that** it is made by a mixture of a vitreous phase and by the second set of phases (2).

14. Treated LD scoria according to Claim 13, **characterised in that** the vitreous phase represents 5 to 95% by weight, preferably 5 to 15% by weight of the treated LD scoria.

15. Treated LD scoria according to any one of Claims 10 to 14, **characterised in that** the proportion of alumina present in the treated scoria represents more than 25% by weight, preferably at least 30% by weight of the scoria.

16. Treated LD scoria according to any one of Claims 10 to 15, **characterised in that** the proportion of lime present in the treated scoria represents at least 40% by weight of the scoria.

17. Treated LD scoria according to any one of Claims 10 to 16 in the form of a granulate.

18. Material comprising a mixture of a cement and the granulate according to claim 17.
